(19) **Europäisches Patentamt**
**European Patent Office**
**Office européen des brevets**

(11) **EP 4 379 599 A1**

(12) **EUROPEAN PATENT APPLICATION**
published in accordance with Art. 153(4) EPC

(43) Date of publication:
**05.06.2024 Bulletin 2024/23**

(21) Application number: **23834601.9**

(22) Date of filing: **13.06.2023**

(51) International Patent Classification (IPC):
**G06F 40/216** (2020.01)

(52) Cooperative Patent Classification (CPC):
**G06F 40/216; G06F 40/289**

(86) International application number:
**PCT/CN2023/100021**

(87) International publication number:
**WO 2024/007827 (11.01.2024 Gazette 2024/02)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **07.07.2022 CN 202210795690**

(71) Applicant: **Mashang Consumer Finance Co., Ltd.
Chongqing 401121 (CN)**

(72) Inventors:
• **LI, Changlin
  Chongqing 401121 (CN)**
• **XIAO, Bing
  Chongqing 401121 (CN)**
• **CAO, Lei
  Chongqing 401121 (CN)**
• **LUO, Qishuai
  Chongqing 401121 (CN)**

(74) Representative: **Zaboliene, Reda
  Metida
  Business center Vertas
  Gyneju str. 16
  01109 Vilnius (LT)**

(54) **WORD SEGMENTATION METHOD AND APPARATUS FOR TEXT, AND COMPUTER DEVICE AND STORAGE MEDIUM**

(57)     An embodiment of the present application provides a text segmentation method, a device, a computer device and a storage medium, among them, the method includes: obtaining a text to be segmented, preprocessing the text to be segmented, and obtaining a processed text; performing a breakpoint position identification in the processed text; the breakpoint position identification includes calculating a possibility value of a breakpoint between two adjacent characters in the processed text, and identifying a position of the breakpoint in the processed text based on the possibility value of the breakpoint; segmenting the text to be segmented according to the position of the breakpoint that is identified. Through this embodiment, the problem of low efficiency of word segmentation in existing word segmentation method can be solved.

**FIG. 1**

S102
Obtain a text to be segmented, preprocess the text to be segmented and obtain a processed text

S104
Calculate a possibility value of a breakpoint between two adjacent characters in the processed text, and identify a position of the breakpoint in the processed text based on the possibility value of the breakpoint

S106
Segment the text to be segmented based on the position of the breakpoint that is identified

## Description

### CROSS REFERENCE

The present application claims priority to a Chinese patent application filed with the China National Intellectual Property Administration on July 7, 2022, with application number 202210795690.9 and titled "TEXT SEGMENTATION METHOD, DEVICE, COMPUTER DEVICE AND STORAGE MEDIUM". The entire content of the present application is incorporated in the present application by reference.

### FIELD

The present application relates to the field of natural language processing, and in particular, to a text segmentation method, a device, a computer device and a storage medium.

### BACKGROUND

Word segmentation of a text is an important step in a process of a natural language processing. A segmentation result with a high-accuracy is a prerequisite required for a process of a deep natural language processing, such as a personalized recommendation, a sentiment analysis, a topic classification, a public opinion analysis, etc.

### SUMMERY

An embodiment of the present application provides a text segmentation method, a device, a computer device, and a storage medium, and solves the problem of a low efficiency of a word segmentation in an existing word segmentation method.

In order to realize the above technical solution, the present application is implemented as follows:
In an aspect, the present application provides a text segmentation method, including: obtaining a text to be segmented, preprocessing the text to be segmented, and obtaining a processed text; performing a breakpoint position identification in the processed text; the breakpoint position identification includes calculating a possibility value of a breakpoint between two adjacent characters in the processed text, and identifying a position of the breakpoint in the processed text based on the possibility value of the breakpoint; segmenting the text to be segmented according to the position of the breakpoint that is identified.

In an aspect, the present application provides a text segmentation device, including: a preprocessing unit, being used to obtain a text to be segmented, preprocess the text to be segmented, and obtain a processed text; a breakpoint identification unit, being used to perform a breakpoint position identification in the processed text; the breakpoint position identification includes calculating a possibility value of a breakpoint between two adjacent characters in the processed text, and identifying a position of the breakpoint in the processed text based on the possibility value of the breakpoint; segmenting the text to be segmented according to the position of the breakpoint that is identified.

In an aspect, a computer device is provided by an embodiment of the present application, the devices include: a processor; and a storage device arranged to store computer-executable instructions configured to be executed by the processor for performing steps of the method as in the first aspect.

In an aspect, a storage medium is provided by an embodiment of the present application, wherein, the storage medium is used to store computer-executable instructions, and the computer-executable instructions causing a computer to perform steps of the method as in the first aspect.

It can be seen that in this embodiment, first, obtaining a text to be segmented, preprocessing the text to be segmented to obtain a processed text, and then performing the breakpoint position identification in the processed text. The breakpoint position identification includes: calculating a possibility value of a breakpoint between two adjacent characters in the processed text, identify a position of the breakpoint in the processed text according to the possibility value of the breakpoint, finally, segmenting the text to be segmented based on the position of the breakpoint that is identified. On one hand, in this embodiment, there is no need to calculate complex parameters such as a left branch entropy and a right branch entropy, an accessor variety, etc. during word segmentation. Thus the efficiency of word segmentation can be improved. On another hand, because this embodiment determines whether there is the breakpoint between two adjacent characters, there is no limit to the length of the word after word segmentation, thus words of any length can be obtained by performing a word segmentation. Therefore, according to this embodiment, it is possible to solve the problem that the existing word segmentation method has the low efficiency of word segmentation and limits the length of the words after word segmentation.

### BRIEF DESCRIPTION OF THE DRAWINGS

In order to explain the embodiments of the present application or the technical solutions in the prior art more clearly, the drawings needed to be used in the description of the embodiments or the prior art will be briefly introduced below. Obviously, the drawings in the following description are only are some of the embodiments described in one or more of the present application. For those of ordinary skill in the art, other drawings can be obtained based on these drawings without exerting any creative effort.

FIG. 1 is a schematic flowchart of a text segmentation method provided by an embodiment of the present application;

FIG. 2 is a schematic flowchart of detecting whether there is a breakpoint between two adjacent characters provided by an embodiment of the present application;

FIG. 3 is a schematic flowchart of detecting whether there is a breakpoint between two adjacent characters provided by another embodiment of the present application;

FIG. 4 is a schematic structural diagram of a text segmentation device provided by an embodiment of the present application;

FIG. 5 is a schematic structural diagram of a computer device provided by an embodiment of the present application.

DESCRIPTION

In order to enable those skilled in the art to better understand one or more technical solutions in the present application, the technical solutions in the embodiments of the present application will be clearly and completely described below in conjunction with the drawings in the embodiments of the present application. Obviously, the described embodiments are only one or more partial embodiments of the present application, rather than all embodiments. Based on one or more embodiments of the present application, all other embodiments obtained by those of ordinary skill in the art without creative efforts should fall within the protection scope of the present application.

It should be noted that, without conflict, one or more embodiments and features in the embodiments of the present application can be combined with each other. The embodiments of the present application will be described in detail below with reference to the accompanying drawings and embodiments.

At present, a word segmentation can be performed based on a statistical method. The main principle of the method is to calculate statistical features by using a large amount of experimental corpus for determining words in a text. For example, the statistical features may be a word frequency, a word formation probability, a left branch entropy and a right branch entropy, an accessor variety, etc. However, in this word segmentation method, on one hand, due to a need to calculate parameters such as the left branch entropy and the right branch entropy, the accessor variety, etc., a calculation process is complicated, which results in a low efficiency of word segmentation. On another hand, there is a limit on a length of a word after word segmentation. Usually, the word after segmentation includes at most four characters, and a word including five or more characters cannot be obtained through segmentation.

In order to solve the problem that the existing word segmentation method has the low efficiency of word segmentation and the length of the word after word segmentation is limited, an embodiment of the present application provides a text segmentation method. The main idea of this method includes: first, obtaining a text to be segmented, preprocessing the text to be segmented to obtain a processed text, and then performing a breakpoint position identification in the processed text. The breakpoint position identification includes: calculating a first possibility value of a breakpoint between two adjacent characters in the processed text, and/or, calculating a second possibility value of the breakpoint, which does not exist between two adjacent characters in the processed text, and identifying a position of the breakpoint in the processed text according to a calculation result, finally, segmenting the text to be segmented according to the position of the breakpoint that is identified. On one hand, in this embodiment, there is no need to calculate complex parameters such as the left branch entropy and the right branch entropy, the accessor variety, etc. during word segmentation, so the efficiency of word segmentation can be improved. On another hand, because this embodiment determines whether there is a breakpoint between two adjacent characters, there is no limit to the length of the word after word segmentation, so the word of any length can be obtained by word segmentation. Therefore, according to this embodiment, it is possible to solve the problem that the existing word segmentation method has low efficiency of word segmentation and limits the length of the words after word segmentation.

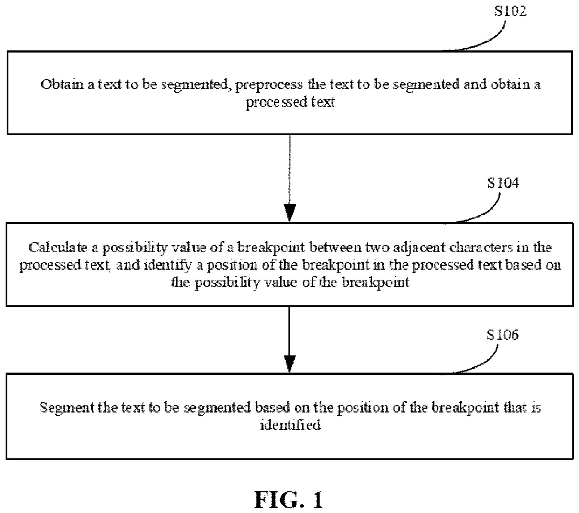

FIG. 1 is a schematic flow chart of a text segmentation method provided by an embodiment of the present application. As shown in FIG. 1, the process includes the following steps:

Step S102, obtaining a text to be segmented, preprocessing the text to be segmented, and obtaining a processed text.

Step S104, performing a breakpoint position identification in the processed text; the breakpoint position identification includes calculating a possibility value of a breakpoint between two adjacent characters in the processed text, and identifying a position of the breakpoint in the processed text based on the possibility value of the breakpoint.

Step S106, segmenting the text to be segmented based on the position of the breakpoint that is identified.

It can be seen that in this embodiment, first obtaining the text to be segmented, preprocessing the text to be segmented and obtaining the processed text, and then performing the breakpoint position identification in the processed text. The breakpoint position identification includes calculating the possibility value of the breakpoint between two adjacent characters in the processed text, and identifying the position of the breakpoint in the processed text based on the possibility value of the breakpoint. On the one hand, in this embodiment, there is no need to calculate complex parameters such as the left branch entropy and the right branch entropy, the accessor variety, etc. during word segmentation, so the efficiency of word segmentation can be improved. On the other hand, because this embodiment performs a determination as whether there is the breakpoint between two adjacent characters, and there is no limit to the length of the word after word segmentation, so words of any length can be obtained by word segmentation. Therefore, through this embodiment, it is possible to solve the problem that the existing word segmentation method has the low efficiency of word segmentation and limits the length of the segmented words.

The text segmentation method in this embodiment can be executed by a server specialized in natural language processing.

In the above step S102, the text to be segmented is obtained. In one embodiment, the text to be segmented can be obtained from a text collection to be segmented. The text collection to be segmented includes a collection of a large number of sentences, and the text to be segmented can be any sentence in the text collection to be segmented.

In the above step S102, the text to be segmented is also pre-processed to obtain the processed text. There can be many ways to preprocess the text to be segmented, such as setting a text format of the text to be segmented to a default format to facilitate a segmentation of the text, or removing punctuation marks from the text to be segmented to facilitate the segmentation of the text.

In one embodiment, the text to be segmented is preprocessed to obtain the processed text, specifically: matching a pre-established stop vocabulary library with the text to be segmented and determining a character that is in both the text to be segmented and the stop vocabulary library, identifying the position of the breakpoint in the text to be segmented according to the determined character, and using the text to be segmented that has been identified as the processed text.

Specifically, the stop vocabulary library is pre-established, and the stop vocabulary library includes preset stop phrases, preset stop words, preset punctuation marks, preset numbers, preset special symbols, etc. There is a plurality of stop vocabulary libraries, each belonging to different fields. For example, there are three stop vocabulary libraries, which belong to a financial field, a military field, and a political field. The stop word library that belongs to the same field as the text to be segmented can be selected to preprocess the text to be segmented to improve the accuracy of preprocessing.

During preprocessing, the pre-established stop vocabulary library is matched with the text to be segmented to determine the character that is in both the text to be segmented and the stop vocabulary library. Since the determined character is in the stop vocabulary library, i.e., is a phrase or a single word or a single number or a single symbol that has been segmented. Therefore, the position of the breakpoint can be identified in the text to be segmented based on the determined character. In the text to be segmented, a position before the determined character and a position after the determined character can be identified are positions of breakpoints. And, the text to be segmented that has been identified is used as the processed text.

Before identifying the position of the breakpoint in the text to be segmented based on the determined character, position symbols can also be inserted into the text to be segmented. The inserted position symbol represents the position of each character in the text to be segmented in the text to be segmented. For example, for the text to be segmented "这里有个小鸭子。", the following is obtained after inserting position symbols before a first character in the text to be segmented and after each character in the text to be segmented:

0这1里2有3个4小5鸭6子7。8

After inserting the position symbols, according to the determined character, the position of the breakpoint is identified in the text to be segmented as follows: when the determined character is a stop phrase, in the text to be segmented, using a position represented by a position symbol before the stop phrase and a position represented by a position symbol after the stop phrase as positions of breakpoints; when the determined character is a stop word, a punctuation mark, a number or a special symbol, in the text to be segmented, using a position represented by the position symbol before the determined character and a position represented by the position symbol after the determined character as positions of breakpoints.

Specifically, because the determined character is both in the text to be segmented and the stop vocabulary library, and in the pre-established stop vocabulary library, not only stop phrases are recorded, but also stop words, punctuation marks, numbers and special symbols, etc., are recorded, so the determined character may belong one of two situations. In one situation, the determined character is the stop phrase, for example, for the text to be segmented "这里有个小鸭子。", in which the determined character is "鸭子"; in another case, the determined character is the stop word, the punctuation mark, the number or the special symbol. For example, for the text to be segmented "你吃饭了吗?", the determined character is "?".

When the determined character is the stop phrase, in the text to be segmented, the position represented by the position symbol before the stop phrase and the position represented by the position symbol after the stop phrase are used as the positions of breakpoints. For example, for the text to be segmented "这里有个小鸭子。", in which the determined character is "鸭子", then the position represented by the position symbol "5" before "鸭子" and the position represented by the position symbol "7" after "鸭子" are used as the positions of breakpoints. Correspondingly, the positions of breakpoints can be recorded as (5, 7).

When the determined character is the stop word, the punctuation mark, the number or the special symbol, in the text to be segmented, the position represented by the position symbol before the determined character and the position represented by the position symbol after the determined character are used as the positions of breakpoints. For example, for the text to be segmented "这里有个小鸭子。", in which the determined character is "。", then the position represented by the position symbol "7" before "。" and the position represented by the position symbol "8" after "。" are used as the positions of breakpoints. Correspondingly, the positions of breakpoints can be recorded as (7, 8).

It can be seen that by matching the pre-established stop vocabulary library with the text to be segmented, the position of the breakpoint can be initially identified and recorded in the text to be segmented. By the way of matching the stop vocabulary library, the position of the breakpoint can be preliminarily identified in the text to be segmented. The positions of breakpoints caused by some common stop phrases, words or symbols identified preliminarily can improve the efficiency of the breakpoint position identification.

It should be noted that during the preprocessing process of the text to be segmented, some positions of breakpoints are determined by matching the stop vocabulary library. Correspondingly, in the above step S106, when segmenting the text to be segmented based on positions of breakpoints that are identified, the positions of breakpoints that are based on include the position of the breakpoint obtained during the preprocessing process and the position of the breakpoint identified in step S104.

Further, in this embodiment, after using the text to be segmented that has been identified as the processed text, it also includes recording the position of the determined character in the text to be segmented, so as to skip the determined character when identifying the position of the breakpoint in step S104.

Specifically, when the determined character is the stop phrase, in the text to be segmented, the position represented by the position symbol before the stop phrase and the position represented by the position symbol after the stop phrase are used as the positions of breakpoints, and the positions of breakpoints are recorded as the position of the determined character in the text to be segmented, so as to skip the determined character during the process of the breakpoint position identification in step S104. For example, for the text to be segmented "这里有个小鸭子 。", in which the determined character is "鸭子", then the position represented by the position symbol "5" before "鸭子" and the position represented by the position symbol "7" after "鸭子" are used as the positions of breakpoints, i.e., the position of the determined character in the text to be segmented. Correspondingly, the position of the determined character can be recorded as (5, 7).

When the determined character is the stop word, the punctuation mark, the number or the special symbol, in the text to be segmented, the position represented by the position symbol before the determined character and the position represented by the position symbol after the determined character are used as the positions of breakpoints, and the positions of breakpoints are recorded as the position of the determined character in the text to be segmented, so as to skip the determined character during the process of the breakpoint position identification in step S104. For example, for the text to be segmented "这里有个小鸭子 。", in which the determined character is "。", then the position represented by the position symbol "7" before "。" and the position represented by the position symbol "8" after "。" are used as the positions of breakpoints, i.e., the position of the determined character in the text to be segmented. Correspondingly, the position of the determined character can be recorded as (7, 8).

It can be understood that in the above method, based on the determined character, the position of the breakpoint identified in the text to be segmented is equivalent to the position of the determined character in the text to be segmented. Through the above process of this embodiment, after matching the pre-established stop vocabulary library with the text to be segmented to determine the character that is in both the text to be segmented and the stop vocabulary library, the determined character is also added to the text to be segmented. The position in the text is recorded so that the determined character can be skipped during the process of the breakpoint position identification in step S104 and the determined character will not be recognized twice.

In the above step S104, the breakpoint position identification is performed in the processed text. The breakpoint position identification includes: calculating the possibility value of the breakpoint between two adjacent characters in the processed text, and identifying the position of the breakpoint in the processed text based on the possibility value of the breakpoint.

The calculating of the possibility value of the breakpoint between two adjacent characters in the processed text includes calculating a first possibility value of the breakpoint between two adjacent characters in the processed text.

The calculating of the possibility value of the breakpoint between two adjacent characters in the processed text includes calculating a second possibility value of the breakpoint, which does not exist between two adjacent characters in the processed text.

The calculating of the possibility value of the breakpoint between two adjacent characters in the processed text includes calculating the first possibility value of the breakpoint between two adjacent characters in the processed text; and calculating the second possibility value of the breakpoint, which does not exist between two adjacent characters in the processed text.

The meaning of two adjacent characters in the processed text is explained here. According to the above process, it can be seen that the text to be segmented that has been identified according to the stop vocabulary library is the processed text. Moreover, the character determined using the stop vocabulary library is not deleted from the text to be segmented. Therefore, the text to be segmented includes the same character as the processed text. However, since the character determined by the stop vocabulary library no longer need to participate in the process of the breakpoint position identification in step S104, in step S104, the two adjacent characters involved in the breakpoint position identification refer to any two adjacent characters in the processed text, excluding the character determined by the stop vocabulary library. In step S104, through the process of the breakpoint position identification, it is identified whether there is the breakpoint between two adjacent characters in the processed text.

For example, for the text to be segmented "今天吃饭了吗", the determined character obtained by the stop vocabulary library is "吃饭", and "吃饭" no longer participates in the process of the breakpoint position identification in step S104. Therefore, in step S104, the two adjacent characters involved in the breakpoint position identification refer to any two adjacent characters in the processed text "今天吃饭了吗", and the adjacent character do not include "吃饭". Two adjacent characters can include "今天 " and "了吗". Among them, "天" and "了" are not considered as adjacent characters because there is "吃饭" between them. In step S104, through the process of the breakpoint position identification, it is identified whether there is the breakpoint in "今天" and whether there is the breakpoint in "了吗".

The following describes how to perform the breakpoint position identification in step S104 to skip the character determined by matching the stop vocabulary library.

In one embodiment, in step S104, calculating the possibility value of the breakpoint between two adjacent characters in the processed text, and identifying the position of the breakpoint in the processed text based on the possibility value of the breakpoint, specifically includes:

(a1) Using a starting position of the processed text as a traversal starting position and executing a first traversal process;
(a2) If a position of a breakpoint is identified, using the position of the breakpoint as the traversal starting position and repeating the first traversal process, if a recorded position is traversed, continuing the traversal from the traversed position until a next recorded position is traversed, and using the next recorded position as the traversal starting position and repeating the first traversal process.

In action (a1), the starting position of the processed text i.e., a position before a first character in the processed text, is used as the traversal starting position, and the first traversal process is executed. In the first traversal process, each two adjacent characters are traversed starting from the traversal starting position, and the first possibility value of the breakpoint between each two adjacent characters that have been traversed is calculated, and/or, the second possibility value of the breakpoint, which does not exist between each two adjacent characters that have been traversed is calculated, and based on the calculation result, whether there is the breakpoint between every two adjacent characters that have been traversed is identified. In one case, according to the calculation result, when it is determined that there is the breakpoint between each two adjacent characters that have been traversed, then the position of the breakpoint is determined. In another case, the position of the breakpoint is not traversed, but the previously recorded position of the determined character in the text to be segmented is traversed. In another case, an ending position of the processed text is traversed and the traversal is determined to be end, the ending position is a position after a last character in the processed text.

In an example, for the processed text "0 今 1 天 2 吃 3 饭 4 了 5 吗 6" that has been added with position symbols, where "吃饭" is the determined character, and the corresponding recorded position is (2, 4). For the processed text, traverse starts from position "0". If it is determined that there is a breakpoint before "今天", then it is determined that the position of the breakpoint is traversed, and the position of the breakpoint is 1. If it is determined that there is no breakpoint between "今天", then continue the traversal and find that the traversal reaches position 2, which is the pre-recorded position of the determined character in the text to be segmented. If there is no character predetermined through the stop vocabulary library in the sentence "0 今 1 天 2 吃 3 饭 4 了 5 吗 6", then traverse from position "0" and determine there is no breakpoint between any two adjacent characters, and traverse directly to the ending position 6 of the processed text.

In action (a2), if the position of the breakpoint is identified, the position of the breakpoint is used as the traversal starting position and the first traversal process is repeated. Referring to the previous example, if there is a breakpoint between "今 天", the position of the breakpoint is 1, and the position 1 is used as the traversal starting position , and continues to traverse backwards. A special case needs to be explained here, starting from the position 1, when it is found that the next position is the position 2, and there is only one character between position 1 and position 2, then this character is an independent word in a segmentation result. A similar example to this situation is, for the sentence "0 你 1 好 2 美 3 丽 4", assuming that the position recorded by matching the stop vocabulary library is (1, 4), then traverse starting from position 0, when it is found that position 1 is the recorded position, and there is only one character between position 0 and position 1, then this character is an independent word in the segmentation result. It should be noted that after matching the stop vocabulary library, the position of the breakpoint has been identified and recorded in the text to be segmented based on the determined character, so the recorded position can be used as the position of the breakpoint to participate in word segmentation.

In action (a2), during the traversal process, if the previously recorded position recorded by matching the stop word library is traversed, then the traversal continues from the traversed position until the next recorded position is traversed, the next recorded position is used as the traversal starting position and the first traversal process is repeated. Take the sentence "0 今 1 天 2 吃 3 饭 4 了 5 吗 6" as an example, the pre-recorded position is (2, 4), assuming that during the traversal process, it is determined that there is no breakpoint between "今天", then continue to traverse and the position 2 is traversed, the traversal continues from the position 2 until a next position of the pre-recorded position 2, i.e., the position 4, is traversed, the position 4 is used as the traversal starting position, and the first traversal process is repeated.

The first traversal process includes traversing every two adjacent characters from the traversal starting position, calculating the first possibility value of the breakpoint between each two adjacent characters that have been traversed, and/or calculating the second possibility value of the breakpoint, which does not exist between every two adjacent characters that have been traversed, identifying whether there is the breakpoint between every two adjacent characters traversed according to the calculation result, until the position of the breakpoint is identified or the recorded position is traversed, or the ending position of the processed text is traversed.

In this embodiment, when recording the position of the character matched through the stop word library, the position of the character can be recorded in a specific format, such as a format (starting position, ending position), so when the recorded position is traversed, the recorded position is the starting position of the character that is matched. Continue to traverse backwards, the next recorded position that is traversed is the ending position of the character that is matched. Therefore, the next recorded position that is traversed is used as the traversal starting position and the first traversal process is repeated.

It can be seen that in this embodiment, through the above actions (a1) and (a2), the pre-recorded position can be skipped through a loop traversal, so as to avoid a secondary identification of the pre-matched character.

In another embodiment, in step S104, calculating the possibility value of the breakpoint between two adjacent characters in the processed text, and identifying the position of the breakpoint in the processed text based on the possibility value of the breakpoint, specifically includes:

(b1) Obtaining a plurality of sub-texts by segmenting the processed text according to the starting position, the ending position and the recorded position of the processed text;
(b2) For each sub-text, using the starting position of the sub-text as the traversal starting position and performing a second traversal process; the second traversal process includes traversing every two adjacent characters from the traversal starting position, and calculating the first possibility value of the breakpoint between every two adjacent characters that have been traversed, and/or, calculating the second possibility value of the breakpoint, which does not exist between every two adjacent characters that have been traversed, identifying whether there is the breakpoint between each two adjacent characters that have been traversed according to the calculation result, until the position of the breakpoint is identified or the ending position of the sub-text is traversed;
(b3) If the position of the breakpoint is identified, using the position of the breakpoint as the traversal starting position and repeating the second traversal process.

In action (b1), the processed text is segmented according to the starting position, the ending position and the recorded position of the processed text to obtain the plurality of sub-texts. For example, for the sentence "0 今 1 天 2 吃 3 饭 4 了 5 吗 6", in which "吃饭" is the predetermined character, and the corresponding recorded position is (2, 4), then the starting position and the ending position of each sub-text can be determined according to the starting position, the ending position and the recorded position of the processed text, and obtain the plurality of sub-texts based on the starting position and the ending position of each sub-text, among them, in each sub-text obtained through segmentation, no predetermined character is included. For example, the plurality of sub-texts are obtained through segmentation, namely "0 今 1 天 2" and "4 了 5 吗 6".

In action (b2), in each sub-text, the starting position of the sub-text is used as the traversal starting position and the second traversal process is performed. In another case, if the position of the breakpoint is not traversed, but the ending position of the sub-text is reached, the end of the traversal is determined, and the ending position is the position after the last character in the sub-text.

In action (b3), if the position of the breakpoint is traversed, the position of the breakpoint is used as the traversal starting position and the second traversal process is repeated.

Taking the sub-text "0 今 1 天 2" as an example, traversing from position 0, determine that there is no breakpoint between "今天", traverse to the position 2 and the end of the traversal is determined. Take the sub-text "4 了 5 吗 6" as an example, traversing from the position 4, if it determines that there is the breakpoint between "了" and "吗", then the position of the breakpoint 5 is recorded, and from position 5 and traverse to position 6, and determine that the traversal is complete.

It can be seen that through this embodiment, the processed text can be segmented according to the starting position, the ending position and the recorded position of the processed text, to obtain the plurality of sub-texts, and within each sub-text, the pre-recorded positions are skipped through loop traversal to avoid the secondary identification of pre-matched characters.

In another embodiment, within each sub-text, there is no need to perform the loop traversal, and the first possibility value of the breakpoint between every two adjacent characters in the sub-text can be calculated, and/or, the second possibility value of the breakpoint, which does not exist between every two adjacent characters in the sub-text can be calculated, and based on the calculation result, the position of the breakpoint is identified within the sub-text.

The second traversal process includes traversing every two adjacent characters from the traversal starting position, calculating the first possibility value of the breakpoint between every two adjacent characters that have been traversed in the sub-text, and/or, calculating the second possibility value of the breakpoint, which does not exist between every two adjacent characters that have been traversed in the sub-text, and identifying whether there is the breakpoint between every two adjacent characters that have been traversed based on the calculation result. In one case, according to the calculation result, when it is determined that there is the breakpoint between each two adjacent characters that have been traversed, and then the position of the breakpoint is determined.

The above action (a1) and the above action (b2) both involve the process of calculating the first possibility value and/or the second possibility value, and identifying whether there is the breakpoint between two adjacent characters based on the calculation result. In this process and in step S104, the calculating of the possibility value of the breakpoint between two adjacent characters in the processed text, and the identifying of the position of the breakpoint in the processed text based on the possibility value of the breakpoint are similar. Next, the process of calculating the possibility value of the breakpoint between two adjacent characters in the processed text, and identifying the position of the breakpoint in the processed text according to the possibility value of the breakpoint in step S104, is introduced below. For the specific implementation details of the above action (a1) and the above action (b2), please refer to the following description.

In step S104, calculating the possibility value of the breakpoint between two adjacent characters in the processed text, and identifying the position of the breakpoint in the processed text according to the possibility value of the breakpoint, specifically includes:

(c1) In the processed text, calculating the first possibility value of the breakpoint between two adjacent characters; if the first possibility value is less than or equal to a first preset threshold, determining that there is no breakpoint between the two adjacent characters; if the first possibility value is greater than the first preset threshold, then calculating the second possibility value of the breakpoint, which does not exist between the two adjacent characters; if the second possibility value is less than a second preset threshold, then it is determined that there is the breakpoint between the two adjacent characters, if the second possibility value is greater than or equal to the second preset threshold, it is determined that there is no breakpoint between the two adjacent characters.

Or, (c2), in the processed text, calculating the second possibility value of the breakpoint, which does not exist between two adjacent characters; if the second possibility value is greater than or equal to the second preset threshold, determining that there is no breakpoint between two adjacent characters. If the second possibility value is less than the second preset threshold, then the first possibility value of the breakpoint between two adjacent characters is calculated; if the first possibility value is greater than the second preset threshold, it is determined that there is the breakpoint between two adjacent characters. If the first possibility value is less than or equal to the first preset threshold, it is determined that there is no breakpoint between two adjacent characters.

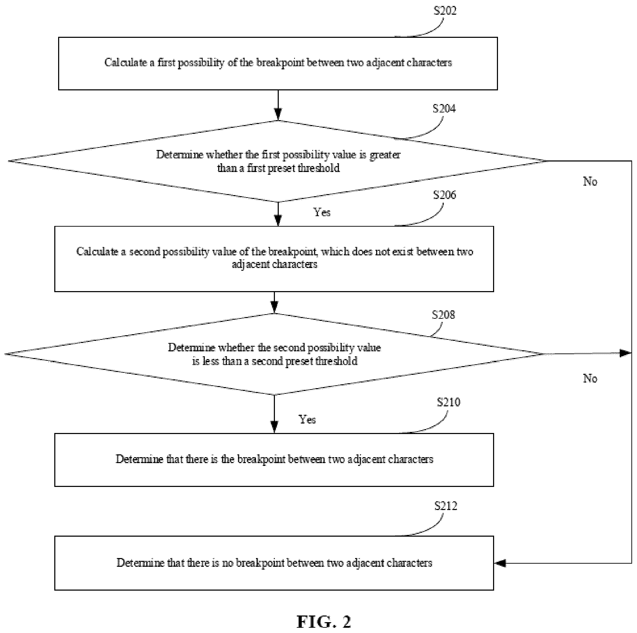

FIG. 2 is a schematic flowchart of detecting whether there is the breakpoint between two adjacent characters provided by an embodiment of the present application. As shown in FIG. 2, the process includes:

Step S202, calculating the first possibility value of the breakpoint between two adjacent characters.
Step S204, determining whether the first possibility value is greater than the first preset threshold.

If yes, execute step S206, otherwise, execute step S212.

Step S206, calculating the second possibility value of the breakpoint, which does not exist between two adjacent characters.

Step S208, determining whether the second possibility value is less than the second preset threshold; If yes, execute step S210; otherwise, execute step S212.

Step S210, determining that there is the breakpoint between two adjacent characters.

Step S212, determining that there is no breakpoint between two adjacent characters.

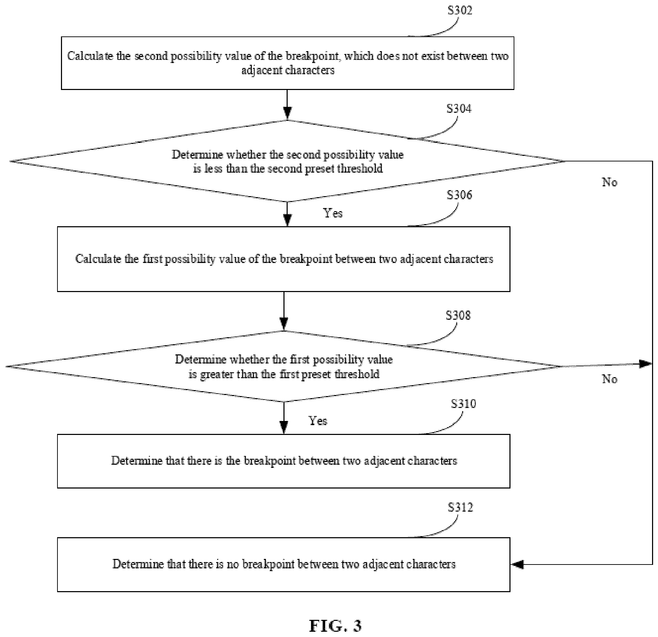

FIG. 3 is a schematic flowchart of detecting whether there is the breakpoint between two adjacent characters provided by another embodiment of the present application. As shown in FIG. 3, the process includes:

Step S302, calculating the second possibility value of the breakpoint, which does not exist between two adjacent characters.

Step S304, determining whether the second possibility value is less than the second preset threshold.

If yes, execute step S306; otherwise, execute step S312.

Step S306, calculating the first possibility value of the breakpoint between two adjacent characters.

Step S308, determining whether the first possibility value is greater than the first preset threshold.

If yes, execute step S310; otherwise, execute step S312.

Step S310, determining that there is the breakpoint between two adjacent characters.

Step S312, determining that there is no breakpoint between two adjacent characters.

It can be seen from the processes of FIG. 2 and FIG. 3, that the first preset threshold is set for the first possibility value, and the second preset threshold is set for the second possibility value. The first preset threshold and the second preset threshold can be set as needed. As can be seen from the processes in FIG. 2 and FIG. 3, we can first calculate the first possibility value of the breakpoint between two adjacent characters, and also calculate the second possibility value of the breakpoint, which does not exist between two adjacent characters. In the case where there is no breakpoint between two adjacent characters, it is only necessary to calculate one of the first possibility value and the second possibility value. In the case where there is a breakpoint between two adjacent characters, both the first possibility value and the second possibility value need to be calculated. Therefore, in this embodiment, it is essentially based on the first possible degree value that there is a breakpoint between two adjacent characters, and/or the second possible degree value that there is no breakpoint between every two adjacent characters, to detect whether there is a breakpoint between two adjacent characters.

In one embodiment, for two adjacent characters in the processed text, calculating the first possibility value of the breakpoint between the two adjacent characters, specifically includes:

(d1) Obtaining a first number of occurrences of each of the two adjacent characters occurs in a preset text library, and obtaining a second number of occurrences of the two adjacent characters occur adjacently in the preset text library.

(d2) Calculating the first possibility value of the breakpoint between two adjacent characters based on the first number of occurrences corresponding to each character in the two adjacent characters and the second number of occurrences.

According to the above, the processed text comes from the text to be segmented, and the text to be segmented can come from the text collection to be segmented. Therefore, in this step, the preset text library can be the text collection to be segmented. Of course, the preset text library can also be other text library pre-established including large amounts of text.

In step (d1), the first number of occurrences of each of the two adjacent characters occurs in the preset text library is obtained. Furthermore, the second number of occurrences of two adjacent characters occur adjacently in the preset text library is obtained. Among them, when obtaining the first number of occurrences, it includes the situation where one of the two adjacent characters appears adjacent to the other of the two adjacent characters. That is to say, the first number of occurrences includes the second number of occurrences. It can be understood that the second number of occurrences is actually the number of occurrences of two adjacent characters appearing as one phrase in the preset text library.

In step (d2), based on the first number of occurrences and the second number of occurrences corresponding to each of the two adjacent characters, the first possibility value of the breakpoint between the two adjacent characters is calculated. In one embodiment, step (d2) specifically includes:

(d21) Obtaining a product by multiplying the first number of occurrences corresponding to each character in two adjacent characters, and calculating a ratio of the product to the second number of occurrences.

(d22) Determining the first possibility value of the breakpoint between two adjacent characters based on the ratio.

In step (d21), the first number of occurrences corresponding to each of the two adjacent characters are multiplied to obtain a product. Furthermore, the product is divided by the second number of occurrences of two adjacent characters as one phrase in the preset text library to obtain a ratio. In step (d22), based on the ratio, the first possibility value of the breakpoint between two adjacent characters is determined.

In one example, the processed text obtained is "有个小鸭子". In this step, starting from "有", the first possibility value of the breakpoint between "有" and "个" is calculated. The calculation process specifically includes:

Obtain a number of occurrences of "有" in the text collection to be segmented as the first number of occurrences, and obtain a number of occurrences of "个" in the text collection to be segmented as the first number of occurrences. When calculating the first number of occurrences, consider a situation that "有" and "个" occur adjacently. And, obtain a number of occurrences of "有个" as a whole phrase in the text collection to be segmented as the second number of occurrences.

Use formula (1) to calculate the first possibility value of the breakpoint between "有" and "个" based on each the first number of occurrences and the second number of occurrences.

$$\log \frac{f(a)*f(b)}{f(ab)} \qquad (1)$$

In formula (1), f(a) represents the number of occurrences of character *a* in the text collection to be segmented, that is, the first number of occurrences, and f(b) represents the number of occurrences of character b in the text collection to be segmented, that is, the first number of occurrences, f(ab) respectively represents the number of occurrences that characters *a* and b occurs adjacently in the text collection to be segmented, that is, the second number of occurrences. Among them, *a* can be "有", *b* can be "个". and ab can be "有个". The calculation result of formula (1) is the first possibility value.

It can be seen that in this embodiment, the first number of occurrences of each character in two adjacent characters in the preset text library, and the second number of occurrences of two adjacent characters occur adjacently in the preset text library can be used to calculate the first possibility value of the breakpoint between two adjacent characters. The calculation process is simple and easy to implement.

In one embodiment, for two adjacent characters in the processed text, calculating the second possibility value of the breakpoint, which does not exist between two adjacent characters, specifically includes:

(e1) Obtaining a first text by removing one of two adjacent characters from the processed text, and obtaining a second text by removing the other of the two adjacent characters from the processed text;
(e2) Calculating the second possibility value of the breakpoint, which does not exist between two adjacent characters according to the processed text, the first text and the second text.

In step (e1), remove any one of the two adjacent characters from the processed text to obtain the first text, and remove the other of the two adjacent characters from the processed text to obtain the second text. In step (e2), based on the processed text, the first text and the second text, calculate the second possibility value of the breakpoint, which does not exist between two adjacent characters.

In one embodiment, calculating the second possibility value of the breakpoint, which does not exist between two adjacent characters according to the processed text, the first text and the second text, specifically includes:

(e21) Determining a first distance between the processed text and the first text, and determining a second distance between the processed text and the second text.
(e22) Determining an average value of the first distance and the second distance as the second possibility value of the breakpoint, which does not exist between two adjacent characters.

What can be known is that the smaller the distance between the two texts, the closer the semantics between the two texts is. Therefore, when the average of the first distance and the second distance is less than a certain threshold, it shows that removing any one of the two adjacent characters has little impact on the semantics of the processed text, so it can be determined that two adjacent characters are not a complete phrase, that is, there may be a breakpoint between two adjacent characters. On the contrary, when the average value of the first distance and the second distance is greater than or equal to the certain threshold, it means that removing any one of the two adjacent characters has a greater semantic impact on the processed text, so it can be determined that two adjacent characters are a complete phrase, that is, there is no breakpoint between two adjacent characters.

According to the above example, the processed text obtained is "有个小鸭子". In this step, starting from "有", calculate the second possibility value of the breakpoint, which does not exist between "有" and "个", the specific calculation process includes:

Remove "有" from the processed text, and get the first text "个小鸭子"; remove "个" from the processed text, get the second text "有小鸭子". Calculate the first distance between the text "有个小鸭子" and the first text "个小鸭子", calculate the second distance between the text "有个小鸭子" and the second text "有小鸭子", take the average value of the first distance and the second distance as the second possibility value of the breakpoint, which does not exist between "有" and "个".

The first distance and the second distance may be an Euclidean distance, a cosine distance, etc. Before calculating the first distance and the second distance, the first text, the second text and the processed text need to be vectorized respectively. The vectorization methods include but are not limited to TF-IDF, word2vec, glove, ELMo, BERT, etc.

According to the processed text, the first text and the second text, the process of calculating the second possibility value of the breakpoint, which does not exist between two adjacent characters can be expressed by the following formula (2).

$$\frac{d(text\_vec,text\_a\_vec)+d(text\_vec,text\_b\_vec)}{2} \qquad (2)$$

Among them, text_vec represents a vector of the processed text, text_a_vec represents a vector of the first text, and text_b_vec represents a vector of the second text. d(text_vec, text_a_vec) represents a first vector distance between the processed text and the first text; d(text_vec, text_b_vec) represents a second vector distance between the processed text and the second text, i.e., the second distance.

It can be seen that in this embodiment, the first text and the second text can be obtained by removing the character from the processed text. According to the first distance between the processed text and the first text and the second distance between the processed text and the second text, determine the second possibility value of the breakpoint, which does not exist between two adjacent characters. The calculation process is simple and easy to implement.

In a specific embodiment, according to the above example, the processed text obtained is "有个小鸭子". In step S104, first calculating the first possibility value of the breakpoint between "有" and "个", through the above steps (d1) and (d2). If the first possibility value is less than or equal to the first preset threshold, then it is determined that there is no breakpoint between "有" and "个". If the first possibility value is greater than the first preset threshold, then calculating the second possibility value of the breakpoint, which does not exist between "有" and "个" through the above steps (e1) and (e2). If the second possibility value is less than the second preset threshold, it is determined that there is the breakpoint between "有" and "个". If the second possibility value is greater than or equal to the second preset threshold, it is determined that there is no breakpoint between "有" and "个".

Through the above process, in step S104, whether there is the breakpoint between two adjacent characters is identified, so that the position of the breakpoint is identified and recorded in the processed text.

In step S106, the text to be segmented is segmented according to the position of the breakpoint that is identified. It should be noted that the position of the breakpoint that is identified used in step S 106 includes the position of the breakpoint identified in step S104, and also includes the position of the breakpoint recorded during the preprocessing process in step S102. In addition, the position before the first character and the position after the last character in the text to be segmented can also be recorded as positions of breakpoints.

In a specific example, the text to be segmented is "这里有个小鸭子". After inserting the position symbols, it is "0 这 1 里 2 有 3 个 4 小 5 鸭 6 子 7". Through step S102, it is determined that the character "鸭子" is obtained, and the positions 5 and 7" of breakpoints " are recorded, and the positions of breakpoints 5 and 7 are recorded as the position of the determined character.

Next, through step S104, the text is segmented according to positions 5 and 7, and a sub-text "0 这 1 里 2 有 3 个 4 小 5" is obtained. Within the sub-text, traversing from the starting position 0 and obtaining "这里", and calculating the first possibility value of the breakpoint between "这" and "里" and the second possibility value of the breakpoint, which does not exist between "这" and "里". Then determining that there is no breakpoint between "这里", then traversing to "里有", and calculating the first possibility value of the breakpoint between "里" and "有" and the second possibility value of the breakpoint, which does not exist between "里" and "有", and then determining that there is the breakpoint between "里有", and recording the position 2 of the breakpoint, and then continuing to traverse from position 2, and "有个" is traversed, and calculating the first possibility value of the breakpoint between "有" and "个" and the second possibility value of the breakpoint, which does not exist between "有" and "个", determining that there is the breakpoint between "有个", and then recording the position 3 of the breakpoint. Then, continue traversing from the position 3 to "个小", and calculating the first possibility value of the breakpoint between "个" and "小" and the second possibility value of the breakpoint, which does not exist between "个" and "小", determining that there is the breakpoint between "个小", and then recording the position 4 of the breakpoint, and then, traverse from position 4 to position 5, confirming the end of the traversal, and finally obtaining the positions "2, 3, 4" of breakpoints.

Furthermore, the position "0" before the first character and the position "7" after the last character in the text to be segmented are recorded as positions of breakpoints.

It can be seen that the position of the breakpoint has three different sources, and among these three sources, there are overlapping positions, such as the position 7. The recorded position of breakpoint can also be deduplicated to obtain the final positions 0, 2, 3, 4, 5, 7 of breakpoints.

In another embodiment, in step S104, when performing the breakpoint identification and recording the position of the breakpoint of the sub-text "0 这 1 里 2 有 3 个 4 小 5", when traversing to position 2 and determining that there is a breakpoint, the positions of breakpoints can be recorded as 0 and 2. When traversing to position 3 and determining the existence of a breakpoint, positions 2 and 3 of breakpoints can be recorded. That is, when the breakpoint is traversed, both the traversal starting position and the position of the breakpoint will be recorded, and thus obtain a plurality of positions of breakpoints as 0, 2, 2, 3, 3, 4, 4, and 5. Based on this, remove duplicates from the plurality of positions of breakpoints that have been obtained and obtain positions 0, 2, 3, 4, 5 of breakpoints. The positions of breakpoints obtained here are merged with the positions of breakpoints obtained in step S102 and the first and last positions of the text to be segmented to obtain the final positions of breakpoints.

In the above step S106, the text to be segmented is segmented at the recorded position of breakpoint. Specifically, a delimiter is inserted at the position of the breakpoint that is recorded so as to segment the text to be segmented. For example, the word segmentation result is obtained: |这里|有|个|小|鸭子|.

In this embodiment, any breakpoint symbol can be used to segment the text to be segmented. There is no need to calculate complex parameters during the segmentation process. The implementation is simple and the segmentation efficiency is high.

To sum up, the embodiments of the text segmentation method provided above have at least the following technical effects:

(1) There is no need to calculate complex parameters such as the left branch entropy and the right branch entropy, number of adjacency changes, etc., which can improve word segmentation efficiency.

(2) There is no limit on the length of the phrase after segmentation, and phrases of any length can be obtained by segmentation.

(3) By calculating the first possibility value of the breakpoint between two adjacent characters and the second possibility value of the breakpoint, which does not exist between two adjacent characters in different ways, the accuracy of breakpoint detection can be improved, thereby improving the accuracy of word segmentation.

(4) This text segmentation method is highly transferable and versatile, and can be applied to various scenarios. For example, it is applied to the field of new word recognition, and new words are discovered by counting word frequencies based on word segmentation.

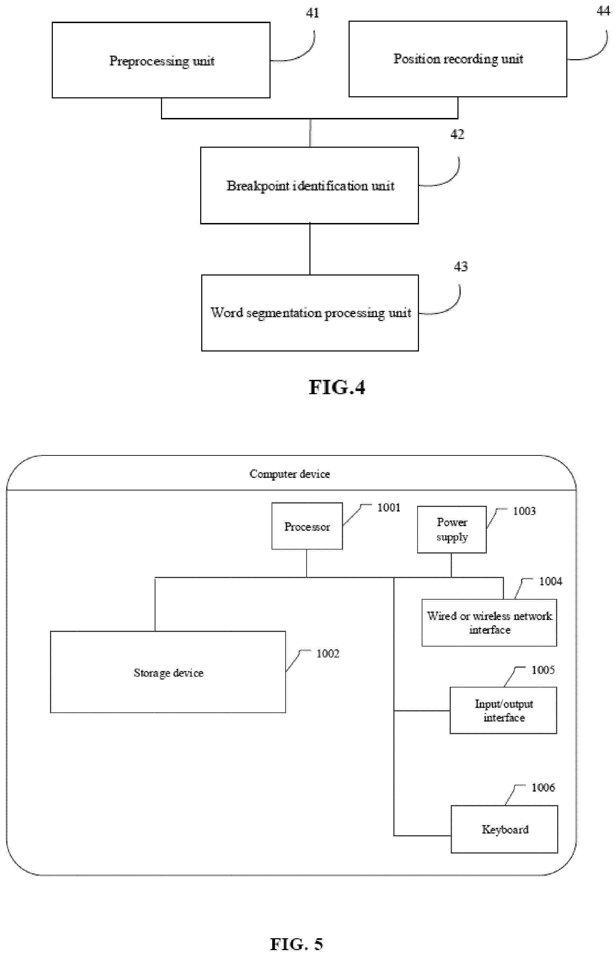

FIG. 4 is a schematic structural diagram of a text segmentation device provided by an embodiment of the present application. As shown in FIG. 4, the device includes:

A preprocessing unit 41 is used to obtain a text to be segmented, preprocess the text to be segmented, and obtain a processed text.

A breakpoint identification unit 42 is used to calculate a possibility value of a breakpoint between two adjacent characters in the processed text, and identify a position of the breakpoint in the processed text based on the possibility value of the breakpoint.

A word segmentation processing unit 43 is used to segment the text to be segmented according to the position of the breakpoint that is identified.

Optionally, the breakpoint identification unit 42 is specifically configured to calculate a first possibility value of the breakpoint between two adjacent characters in the processed text. Optionally, the breakpoint identification unit 42 is specifically configured to calculate a second possibility value of the breakpoint, which does not exist between two adjacent characters in the processed text.

Optionally, the breakpoint identification unit 42 is specifically configured to calculate the first possibility value of the breakpoint between two adjacent characters in the processed text; and calculate the second possibility value of the breakpoint, which does not exist between two adjacent characters in the processed text.

Optionally, the preprocessing unit 41 is specifically used to: match a pre-established stop vocabulary library with the text to be segmented to determine a character that is in both the text to be segmented and the stop vocabulary library, identify the position of the breakpoint in the text to be segmented according to the determined character, and use the text to be segmented that has been identified as the processed text.

Optionally, a position recording unit 44 is also included, which is used to: record the position of the determined character in the text to be segmented after obtaining the processed text, so as to skip the determined character when identifying the position of the breakpoint.

Optionally, the breakpoint identification unit 42 is specifically configured to: use a starting position of the processed text as a traversal starting position and executing a first traversal process.

If the position of the breakpoint is identified, using the position of the breakpoint as the traversal starting position and repeating the first traversal process, if the recorded position is traversed, traversing from the traversed position until a next recorded position is traversed, and using the next recorded position as the traversal starting position and repeating the first traversal process.

Optionally, the first traversal process includes traversing every two adjacent characters starting from the traversal starting position, calculating the first possibility value of the breakpoint between each two adjacent characters that have been traversed, and/or calculating the second possibility value of the breakpoint, which does not exist between every two adjacent characters that have been traversed, identifying whether there is the breakpoint between every two adjacent characters that have been traversed according to the calculation result, until the position of the breakpoint is identified or the recorded position is traversed, or the ending position of the processed text is traversed.

Optionally, the breakpoint identification unit 42 is specifically used to:

> Obtain a plurality of sub-texts by segmenting the processed text according to the starting position, the ending position and the recorded position of the processed text;
> For each sub-text, use the starting position of the sub-text as a traversal starting position and perform a second traversal process;

If the position of the breakpoint is identified, use the position of the breakpoint as the traversal starting position and repeat the second traversal process.

Optionally, the second traversal process includes traversing every two adjacent characters starting from the traversal starting position, and calculating the first possibility value of the breakpoint between every two adjacent characters that have been traversed, and/or, calculating the second possibility value of the breakpoint, which does not exist between every two adjacent characters that have been traversed, identifying whether there is the breakpoint between each two adjacent characters that have been traversed according to the calculation result, until the position of the breakpoint is identified or the ending position of the sub-text is traversed.

Optionally, the breakpoint identification unit 42 is specifically used to:

> In the processed text, calculate the first possibility value of the breakpoint between two adjacent characters; if the first possibility value is less than or equal to a first preset threshold, determine that there is no breakpoint between the two adjacent characters; if the first possibility value is greater than the first preset threshold, then calculate the second possibility value of the breakpoint, which does not exist between the two adjacent characters; if the second possibility value is less than a second preset threshold, then it is determined that there is the breakpoint between the two adjacent characters, if the second possibility value is greater than or equal to the second preset threshold, then it is determined that there is no breakpoint between the two adjacent characters;

Or,
In the processed text, calculate the second possibility value of the breakpoint, which does not exist between two adjacent characters; if the second possibility value is greater than or equal to the second preset threshold, determine that there is no breakpoint between two adjacent characters. If the second possibility value is less than the second preset threshold, then the first possibility value of the breakpoint between two adjacent characters is calculated; if the first possibility value is greater than the second preset threshold, it is determined that there is the breakpoint between two adjacent characters. If the first possibility value is less than or equal to the first preset threshold, it is determined that there is no breakpoint between two adjacent characters.

Optionally, the breakpoint identification unit 42 is also specifically used to:

> Obtain a first number of occurrences of each of the two adjacent characters occurs in a preset text library, and obtain a second number of occurrences of the two adjacent characters occur adjacently in the preset text library;
> Calculate the first possibility value of the breakpoint between two adjacent characters based on the first number of occurrences corresponding to each character in the two adjacent characters and the second number of occurrences.

Optionally, the breakpoint identification unit 42 is also specifically used to:

> Obtain a first text by removing one of two adjacent characters from the processed text, and obtain a second text by removing the other of the two adjacent characters from the processed text;
> Calculate the second possibility value of the breakpoint, which does not exist between two adjacent characters according to the processed text, the first text and the second text.

Optionally, the breakpoint identification unit 42 is also specifically used to:

> Obtain a product by multiplying the first number of occurrences corresponding to each character in two adjacent characters, and calculate a ratio of the product to the second number of occurrences;
> Determine the first possibility value of the breakpoint between two adjacent characters based on the ratio.

Optionally, the breakpoint identification unit 42 is also specifically used to:

> Determine a first distance between the processed text and the first text, and determine a second distance between the processed text and the second text;

Determine an average value of the first distance and the second distance as the second possibility value of the breakpoint, which does not exist between two adjacent characters.

It should be noted that the text segmentation device in this embodiment can implement each process of the afore-mentioned text segmentation method embodiment and achieve the same effects and functions, which will not be repeated here.

An embodiment of the present application also provides a computer device. The device may specifically be the above-mentioned database log parsing device, used to perform the above-mentioned data verification method. FIG. 5 is a schematic structural diagram of the computer device provided by an embodiment of the present application, as shown in FIG. 5, the computer device may vary greatly due to different configurations or performance, and may include one or more processors 1001 and storage device 1002, and the storage device 1002 may store one or more storage application programs or data. Among them, the storage device 1002 can be a temporary storage or a persistent storage. The application program stored in the storage device 1002 may include one or more modules (not shown), and each module may include a series of computer-executable instructions on the computer device. Furthermore, the processor 1001 may be configured to communicate with the storage device 1002 and execute a series of computer-executable instructions in the storage device 1002 on the computer device. The computer device may also include one or more power supplies 1003, one or more wired or wireless network interfaces 1004, one or more input/output interfaces 1005, one or more keyboards 1006, etc.

In a specific embodiment, the computer device includes: a processor; and a storage device arranged to store computer-executable instructions, the computer-executable instructions being configured to be executed by the processor to implement the following process:

obtaining a text to be segmented, preprocessing the text to be segmented, and obtaining a processed text;

performing a breakpoint position identification in the processed text; the breakpoint position identification includes:

calculating a possibility value of a breakpoint between two adjacent characters in the processed text, and identifying a position of the breakpoint in the processed text based on the possibility value of the breakpoint;

segmenting the text to be segmented according to the position of the breakpoint that is identified.

It should be noted that the computer device in this embodiment can implement each process of the embodiment of the afore-mentioned text segmentation method and achieve the same effects and functions, which will not be repeated here.

An embodiment of the present application also provides a storage medium for storing computer-executable instructions.

In a specific embodiment, the storage medium can be a USB disk, an optical disk, a hard disk, etc. When the computer-executable instructions stored in the storage medium are executed by the processor, the following process can be implemented:

obtaining a text to be segmented, preprocessing the text to be segmented, and obtaining a processed text;

performing a breakpoint position identification in the processed text; the breakpoint position identification includes:

calculating a possibility value of a breakpoint between two adjacent characters in the processed text, and identifying a position of the breakpoint in the processed text based on the possibility value of the breakpoint;

segmenting the text to be segmented according to the position of the breakpoint that is identified.

It should be noted that the storage medium in this embodiment can implement each process of the embodiment of the aforementioned text segmentation method and achieve the same effects and functions, which will not be repeated here.

The above has described specific embodiments of the present application. Other embodiments are within the scope of the appended claims. In some cases, the actions or steps recited in the claims can be performed in a different order than in the embodiments and still achieve desired results. Additionally, the processes depicted in the figures do not necessarily require the specific order shown, or the sequential order that are shown, to achieve desirable results. Multitasking and parallel processing are also possible or may be advantageous in certain implementations.

Those skilled in the art should understand that embodiments of the present application may be provided as methods, systems or computer program products. Therefore, embodiments of the present application may take the form of an entirely hardware embodiment, an entirely software embodiment, or an embodiment that combines software and hardware aspects. Furthermore, the present application may take the form of a computer program product embodied on one or more computer-readable storage media (including, but not limited to, disk storage, CD-ROM, optical storage, etc.) embodying computer-usable program code therein.

The present application is described with reference to flowchart illustrations and/or block diagrams of methods, apparatus (systems), and computer program products according to embodiments of the application. It will be understood that each process and/or block in the flowchart illustrations and/or block diagrams, and combinations of processes and/or blocks in the flowchart illustrations and/or block diagrams, can be implemented by computer program instructions. These computer program instructions may be provided to a processor of a general purpose computer, a special purpose computer, an embedded processor, or other programmable data processing device to produce a machine, such that the instructions executed by the processor of the computer or other programmable data processing device produce a device for realizing the functions specified in a process or processes in a flowchart and/or a block or blocks in a block diagram.

These computer program instructions may also be stored in a computer-readable storage device that causes a computer or other programmable data processing device to operate in a particular manner, such that the instructions stored in the computer-readable storage device produce an article of manufacture including the instruction means, the instructions The device implements the functions specified in a process or processes in the flowchart and/or in a block or blocks in the block diagram.

These computer program instructions may also be loaded onto a computer or other programmable data processing device, causing a series of operating steps to be performed on the computer or other programmable device to produce computer-implemented processing, thereby executing on the computer or other programmable device. Instructions provide steps for implementing the functions specified in a process or processes of a flowchart diagram and/or a block or blocks of a block diagram.

In a typical configuration, the computing device includes one or more processors (Central Processing Unit, CPU), input/output interfaces, network interfaces, and memory.

Memory may include non-permanent storage of computer-readable media, random access memory (RAM), and/or non-volatile memory, such as read-only memory (ROM) or flash memory (flash RAM). Memory is an example of computer-readable media.

The computer-readable media includes both persistent and non-volatile, removable and non-removable media that can be implemented by any method or technology for storage of information. The information may be computer-readable instructions, data structures, modules of programs, or other data. Examples of computer storage media include, but are not limited to, phase-change RAM (PRAM), static random access memory (Static RAM, SRAM), dynamic random access memory (Dynamic RAM, DRAM), other types random access memory (RAM), read-only memory (ROM), electrically erasable programmable ROM (EEPROM), flash memory or other memory technology, compact disc read-only memory (CD-ROM), digital versatile disc (DVD) or other optical storage, magnetic tape cassettes, magnetic disk storage or other magnetic storage devices, or any other non-transmission medium that may be used to store information that can be accessed by a computing device. As defined in this article, computer-readable media does not include transitory media, such as modulated data signals and carrier waves.It should also be noted that the terms "comprising," "comprises," or any other variation thereof are intended to cover a non-exclusive inclusion, such that a process, a method, an article, or a device that includes a list of elements not only includes those elements, but also includes other elements are not expressly listed or are inherent to the process, method, article or device. Without further limitation, an element defined by the statement "comprises a..." does not exclude the presence of additional identical elements in the process, method, article, or device that includes the elements.

Embodiments of the present application may be described in the general context of computer-executable instructions, such as program modules, being executed by a computer. Generally, program modules include routines, programs, objects, components, data structures, etc. that perform specific tasks or implement specific abstract data types. One or more embodiments of the present application may also be practiced in distributed computing environments where tasks are performed by remote processing devices connected through a communications network. In this distributed computing environment, program modules may be in both local and remote computer storage media including storage devices.

Each embodiment in the present application is described in a progressive manner. The same and similar parts between the various embodiments can be referred to each other. Each embodiment focuses on its differences from other embodiments. In particular, for the system embodiment, since it is basically similar to the method embodiment, the description is relatively simple. For relevant details, please refer to the partial description of the method embodiment.

The above are only examples of this document and are not intended to limit this document. Various modifications and variations of this document may occur to those skilled in the art. Any modifications, equivalent replacements, improvements, etc. made within the spirit and principles of this document shall be included in the scope of the claims of this document.

## Claims

1. A text segmentation method, comprising:

obtaining a text to be segmented, preprocessing the text to be segmented, and obtaining a processed text;
calculating a possibility value of a breakpoint between two adjacent characters in the processed text, and identifying a position of the breakpoint in the processed text based on the possibility value of the breakpoint;

segmenting the text to be segmented according to the position of the breakpoint that is identified.

2. The text segmentation method according to claim 1, wherein calculating the possibility value of the breakpoint between two adjacent characters in the processed text, comprises:

calculating a first possibility value of the breakpoint between two adjacent characters in the processed text.

3. The text segmentation method according to claim 1, wherein calculating the possibility value of the breakpoint between two adjacent characters in the processed text, comprises:

calculating a second possibility value of the breakpoint, which does not exist between two adjacent characters in the processed text.

4. The text segmentation method according to claim 1, wherein calculating the possibility value of the breakpoint between two adjacent characters in the processed text, comprises:

calculating a first possibility value of the breakpoint between two adjacent characters in the processed text; and

calculating a second possibility value of the breakpoint, which does not exist between two adjacent characters in the processed text.

5. The text segmentation method according to claim 1, wherein preprocessing the text to be segmented, and obtaining the processed text, comprises:

matching a pre-established stop vocabulary library with the text to be segmented and determining a character that is in both the text to be segmented and the pre-established stop vocabulary library,

identifying the position of the breakpoint in the text to be segmented according to the determined character, and determining the text to be segmented that has been identified as the processed text.

6. The text segmentation method according to claim 1, wherein after obtaining the processed text, the method further comprises:

recording a position of the determined character in the text to be segmented so as to skip the determined character when identifying the position of the breakpoint.

7. The text segmentation method according to claim 6, wherein calculating the possibility value of the breakpoint between two adjacent characters in the processed text, and identifying the position of the breakpoint in the processed text based on the possibility value of the breakpoint, comprises:

determining a starting position of the processed text as a traversal starting position and executing a first traversal process;

if the position of the breakpoint is identified, determining the position of the breakpoint as the traversal starting position and repeating the first traversal process until the processed text has been executed;

if a recorded position is traversed, continuing to traverse from the recorded position that is traversed until a next recorded position is traversed, and determining the next recorded position as the traversal starting position and repeating the first traversal process until the processed text has been executed.

8. The text segmentation method according to claim 7, wherein the first traversal process comprises: traversing every two adjacent characters from the traversal starting position, calculating a first possibility value of the breakpoint between each two adjacent characters that have been traversed, and/or calculating a second possibility value of the breakpoint, which does not exist between every two adjacent characters that have been traversed, identifying whether there is the breakpoint between every two adjacent characters that have been traversed according to the calculation result, until the position of the breakpoint is identified or the recorded position is traversed, or an ending position of the processed text is traversed.

9. The text segmentation method according to claim 7, wherein calculating the possibility value of the breakpoint between two adjacent characters in the processed text, and identifying the position of the breakpoint in the processed text based on the possibility value of the breakpoint, comprises:

obtaining a plurality of sub-texts by segmenting the processed text according to the starting position, the ending position and the recorded position of the processed text;

for each sub-text, determining the starting position of the sub-text as a traversal starting position and perform a second traversal process;

if the position of the breakpoint is identified, determining the position of the breakpoint as the traversal starting position and repeating the second traversal process until the sub-text has been traversed.

**10.** The text segmentation method according to claim 9, wherein the second traversal process comprises: traversing every two adjacent characters starting from the traversal starting position, calculating a first possibility value of the breakpoint between every two adjacent characters that have been traversed, and/or, calculating a second possibility value of the breakpoint, which does not exist between every two adjacent characters that have been traversed, identifying whether there is the breakpoint between each two adjacent characters that have been traversed according to the calculation result, until the position of the breakpoint is identified or the ending position of the sub-text is traversed.

**11.** The text segmentation method according to claim 1, wherein calculating the possibility value of the breakpoint between two adjacent characters in the processed text, and identifying the position of the breakpoint in the processed text based on the possibility value of the breakpoint, comprises:

calculating a first possibility value of the breakpoint between two adjacent characters, if the first possibility value is less than or equal to a first preset threshold, determining that there is no breakpoint between the two adjacent characters, if the first possibility value is greater than the first preset threshold, calculating a second possibility value of the breakpoint, which does not exist between the two adjacent characters; if the second possibility value is less than a second preset threshold, determining that there is the breakpoint between the two adjacent characters, if the second possibility value is greater than or equal to the second preset threshold, determining that there is no breakpoint between the two adjacent characters, or, in the processed text, calculating the second possibility value of the breakpoint, which does not exist between two adjacent characters, if the second possibility value is greater than or equal to the second preset threshold, determining that there is no breakpoint between two adjacent characters, if the second possibility value is less than the second preset threshold, calculating the first possibility value of the breakpoint between two adjacent characters, if the first possibility value is greater than the second preset threshold, determining that there is the breakpoint between two adjacent characters, if the first possibility value is less than or equal to the first preset threshold, determining that there is no breakpoint between two adjacent characters.

**12.** The text segmentation method according to claim 2, wherein calculating the first possibility value of the breakpoint between two adjacent characters in the processed text, comprises:

obtaining a first number of occurrences of each of the two adjacent characters occurs in a preset text library, and obtaining a second number of occurrences of the two adjacent characters occur adjacently in the preset text library, calculating the first possibility value of the breakpoint between two adjacent characters based on the first number of occurrences corresponding to each character in the two adjacent characters and the second number of occurrences.

**13.** The text segmentation method according to claim 3, wherein calculating the second possibility value of the breakpoint, which does not exist between two adjacent characters in the processed text, comprises:

obtaining a first text by removing one of two adjacent characters from the processed text, and obtaining a second text by removing the other of the two adjacent characters from the processed text; calculating the second possibility value of the breakpoint, which does not exist between two adjacent characters according to the processed text, the first text and the second text.

**14.** The text segmentation method according to claim 12, wherein calculating the first possibility value of the breakpoint between two adjacent characters based on the first number of occurrences corresponding to each character in the two adjacent characters and the second number of occurrences, comprises:

obtaining a product by multiplying the first number of occurrences corresponding to each character in two adjacent characters, and calculating a ratio of the product to the second number of occurrences; determining the first possibility value of the breakpoint between two adjacent characters based on the ratio.

**15.** The text segmentation method according to claim 13, wherein calculating the second possibility value of the breakpoint, which does not exist between two adjacent characters according to the processed text, the first text and the second text, comprises:

determining a first distance between the processed text and the first text, and determining a second distance between the processed text and the second text; determining an average value of the first distance and the second distance as the second possibility value of the breakpoint, which does not exist between two adjacent characters.

16. A text segmentation device, comprising:

    a preprocessing unit, being used to obtain a text to be segmented, preprocess the text to be segmented, and obtain a processed text;
    a breakpoint identification unit, being used to calculate a possibility value of a breakpoint between two adjacent characters in the processed text, and identify a position of the breakpoint in the processed text based on the possibility value of the breakpoint;
    a word segmentation processing unit, being used to segment the text to be segmented according to the position of the breakpoint that is identified.

17. A computer device, the device comprising:

    a processor; and
    a storage device arranged to store computer-executable instructions configured to be executed by the processor for performing steps of the method of any one of claims 1 to 15.

18. A storage medium, the storage medium being used to store computer-executable instructions, and the computer-executable instructions causing a computer to perform steps of the method according to any one of claims 1 to 15.

S102

Obtain a text to be segmented, preprocess the text to be segmented and obtain a processed text

S104

Calculate a possibility value of a breakpoint between two adjacent characters in the processed text, and identify a position of the breakpoint in the processed text based on the possibility value of the breakpoint

S106

Segment the text to be segmented based on the position of the breakpoint that is identified

**FIG. 1**

S202

Calculate a first possibility of the breakpoint between two adjacent characters

S204

Determine whether the first possibility value is greater than a first preset threshold

No

Yes    S206

Calculate a second possibility value of the breakpoint, which does not exist between two adjacent characters

S208

Determine whether the second possibility value is less than a second preset threshold

No

Yes    S210

Determine that there is the breakpoint between two adjacent characters

S212

Determine that there is no breakpoint between two adjacent characters

**FIG. 2**

S302

Calculate the second possibility value of the breakpoint, which does not exist between two adjacent characters

S304

Determine whether the second possibility value is less than the second preset threshold

Yes

No

S306

Calculate the first possibility value of the breakpoint between two adjacent characters

S308

Determine whether the first possibility value is greater than the first preset threshold

Yes

No

S310

Determine that there is the breakpoint between two adjacent characters

S312

Determine that there is no breakpoint between two adjacent characters

**FIG. 3**

**FIG.4**

**FIG. 5**

## INTERNATIONAL SEARCH REPORT

| International application No. |
|---|
| **PCT/CN2023/100021** |

| **A.** | **CLASSIFICATION OF SUBJECT MATTER** |
|---|---|

G06F40/216(2020.01)i

According to International Patent Classification (IPC) or to both national classification and IPC

| **B.** | **FIELDS SEARCHED** |
|---|---|

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

VEN, CNABS, CNTXT, USTXT, ENTXT, WOTXT, IEEE, ISI, CNKI: 分词, 词语, 词典, 词库, 断点, 划分, 端点, 位置, text, break, point, divide, segment, location, word

| **C.** | **DOCUMENTS CONSIDERED TO BE RELEVANT** | |
|---|---|---|

| Category* | Citation of document, with indication, where appropriate, of the relevant passages | Relevant to claim No. |
|---|---|---|
| X | CN 110705261 A (ZHEJIANG LANCOO TECHNOLOGY CO., LTD.) 17 January 2020 (2020-01-17)<br>description, paragraphs 0057-0124, and figures 1-3 | 1-18 |
| A | CN 109597987 A (ALIBABA GROUP HOLDING LTD.) 09 April 2019 (2019-04-09)<br>entire document | 1-18 |
| A | CN 109492217 A (PING AN TECHNOLOGY (SHENZHEN) CO., LTD.) 19 March 2019 (2019-03-19)<br>entire document | 1-18 |
| A | US 2009150145 A1 (MAGDALEN, Josemina Marcella et al.) 11 June 2009 (2009-06-11)<br>entire document | 1-18 |

| ☐ Further documents are listed in the continuation of Box C. | ☑ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **08 September 2023** | **14 September 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2023/100021**

| Patent document cited in search report | | | Publication date (day/month/year) | Patent family member(s) | | | Publication date (day/month/year) |
|---|---|---|---|---|---|---|---|
| CN | 110705261 | A | 17 January 2020 | None | | | |
| CN | 109597987 | A | 09 April 2019 | TW | 202016765 | A | 01 May 2020 |
| | | | | WO | 2020082890 | A1 | 30 April 2020 |
| CN | 109492217 | A | 19 March 2019 | None | | | |
| US | 2009150145 | A1 | 11 June 2009 | None | | | |

Form PCT/ISA/210 (patent family annex) (July 2022)

**REFERENCES CITED IN THE DESCRIPTION**

**Patent documents cited in the description**

- CN 202210795690